# EUROPÄISCHE PATENTSCHRIFT

(11) **EP 0 709 138 B1**
(45) Veröffentlichungstag und Bekanntmachung des Hinweises auf die Patenterteilung: **05.01.2000**
(21) Anmeldenummer: 95890183.7
(22) Anmeldetag: 11.10.1995
(51) Int. Cl.: B03B 9/06, B07B 4/02, B07C 5/342, G01G 11/18

(54) **Verfahren und Einrichtung zur Bestimmung der Reinheit von aufbereitetem Altglas**
Method and apparatus for determining the purity of recycled glass cullet
Procédé et appareil de détermination de la pureté de groisil

(30) Priorität: 25.10.1994 AT 200494
(43) Veröffentlichungstag der Anmeldung: 01.05.1996
(73) Patentinhaber: Binder & Co. Aktiengesellschaft, 8200 Gleisdorf (AT)
(72) Erfinder: Gschweitl, Karlheinz, A-8211 Grosspesendorf (AT)
(74) Vertreter: Kliment, Peter, Dipl.-Ing.

(56) Entgegenhaltungen:
- EP-A- 0 353 457
- EP-A- 0 616 215
- DD-A- 234 508
- US-A- 4 991 721
- ENGINEERING AND AUTOMATION, Bd. 14, Nr. 2, 1.März 1992 Seiten 12-13, XP 000349360 BEKER E 'Automated sorting improves the quality of recycled glass'

## Beschreibung

Die Erfindung bezieht sich auf ein Verfahren zur Bestimmung der Reinheit von aufbereitetem Altglas gemäß dem Oberbegriff des Anspruches 1.

Die Anforderungen hinsichtlich der Reinheit von aufbereitetem Altglas sind sehr hoch, da heute bereits bis zu 95% Altglas der Schmelze zugeführt wird und dabei maximal 20g opake Fremdkörper sowie 5g Nicht-Eisenmetalle pro Tonne Altglas enthalten sein dürfen.

Diese hohen Reinheitsgrade müssen von den Altglasaufbereitern garantiert und durch Beprobung des aufbereiteten Altglases nachgewiesen werden.

Aus der AT 399 400 B, bzw. der entsprechenden EP 616 215 A ist ein Verfahren zur Bestimmung der Reinheit von aufbereitetem Altglas bekannt. Dabei werden aus dem Strom des bereits aufbereiteten Altglases mittels eines automatischen Probennehmers repräsentative Proben gezogen und einem Sammeltrichter für Proben zugeführt. Aus diesem Sammeltrichter werden die Proben über einen Schwingförderer einem Analaysegerät zugeführt. In diesem werden Analysegerät aus den Proben opake Stoffe, wie Keramik, Porzellan oder Steine, und Nicht-Eisenmetalle vom Reinglas getrennt und die getrennten Stoffe jeweils zugeordneten Auffangbehältern zugeführt. Diese drei Auffangbehälter stehen auf Wiegezellen, die mit einem Rechner verbunden sind, der den Anteil in der Probenmenge ermittelt.

Durch das Auftrennen der Proben in drei Stofffraktionen (opake Stoffe, Nicht-Eisenmetalle, sowie Glas) sind zwei Erkennungssensoren - einer für opake Stoffe und einer für Nicht-Eisenmetalle - sowie zwei Ausblaseinrichtungen für das Ausscheiden des jeweils erkannten Feststoffteiles notwendig, da die Feststoffe zur Analyse getrennt gewogen werden müssen. Desweiteren sind insgesamt drei Wiegezellen notwendig, nämlich je eine für opake Stoffe für Nicht-Eisenmetalle und für Glas, um mit den dabei ermittelten Werten, unter Umständen unter Anwendung eines durch manuelles Verlesen der aussortierten Stoffe nach darin enthaltenen Glasteilen ermittelten Korrekturfaktors, die Fehlstoffanteile errechmen zu können. Zur Ermittlung des Korrekturfaktors wird durch manuelles Verlesen der ausgeschiedenen Fremdstoffe der Anteil an Reinglas bei diesen bestimmt und bei der Berechnung der Güte der Probe entsprechend berücksichtigt.

Bei diesem bekannten Verfahren ergibt sich durch die getrennte Behandlung der beiden Fraktionen der Fehlstoffe, Nicht-Eisen-Metalle einerseits und opake Fremdstoffe (im weiteren kurz KSP genannt) andererseits ein beträchtlicher Aufwand.

Weiters wurde durch die EP 353 457 A wurde eine Einrichtung zum Erkennen und Trennen von stückigen Verunreinigungen aus einem Kunststoff- oder Materialstrom bekannt, bei dem quer zum Materialstrom angeordnete Sensoren vorgesehen sind, die stromauf einer Freifallstrecke angeordnet sind. Diese Sensoren steuern m Bereich der Freifallstrecke angeordnete Blasdüsen.

Bei dieser bekannten Einrichtung ist ein Auffangbehälter zur Aufnahme des ungestört die Freifallstrecke passierenden Gutmaterials und ein Auffangbehälter für die ausgeblasenen Fremdstoffe vorgesehen.

Bei dieser Einrichtung handelt es sich jedoch um eine solche, die einen ankommenden verunreinigten Materialstrom verarbeite und bei der keine Wiegung der ausgeschiedenen Fremdstoffe oder des Gutmaterials erfolgt.

Eine Überprüfung der Reinheit eines bereits bearbeiteten, bzw. von Fremdstoffen gereinigten Materialstromes ist mit der aus der EP 353 457 A bekannten Einrichtung nicht möglich. Das eingangs erwähnte Verfahren ist nicht zur Reinigung eines Materialstromes an sich vorgesehen, sondern lediglich darauf gerichtet einen bereits gereinigten Materialstrom auf seine Reinheit hin zu überprüfen.

Ziel der Erfindung ist es, ein Verfahren zur Überprüfung der Reinheit eines bereits gereinigten bzw. aufbereiteten Altglas-Strom der eingangs erwähnten Art vorzuschlagen, das sich einfach durchführen läßt.

Erfindungsgemäß wird dies durch die kennzeichnenden Merkmale des Anspruches 1 erreicht.

Durch die vorgeschlagenen Maßnahmen ergibt sich eine vereinfachte Verfahrensführung. So erübrigt sich eine gesonderte Wiegung der einzelnen Gruppen von Fremdstoffen, wie opake Fremdstoffe und Nicht-Eisenmetalle. Außerdem kann bei der praktischen Durchführung des erfindungsgemäßen Verfahrens eine, verglichen mit dem bekannten Verfahren, einfacher gestaltete Einrichtung verwendet werden.

Durch die Merkmale des Anspruches 2 ergibt sich der Vorteil, daß sehr rasch in die Aufbereitung des Altglases eingegriffen werden kann, um z.B. den Durchsatz des mit Beimengungen versehenen Altglases zu vermindern, um den Anteil an Fremdstoffen im aufbereiteten Altglas zu vermindern, oder aber den Durchsatz des aufzubereitenden Altglases zu erhöhen, wenn dies die Qualität des aufbereiteten Altglases zuläßt, um die Wirtschaftlichkeit der Aufbereitung des Altglases zu erhöhen.

Durch die Merkmale des Anspruches 3 kann die Tendenz der Qualität des aufbereiteten Altglases erfaßt werden, wodurch es möglich ist, schon vor Erreichung, bzw. Überschreitung der vorgesehenen Warngrenzen in die Aufbereitung des mit Fremdstoffen belasteten Altglases einzugreifen.

Durch die Merkmale des Anspruches 4 ergibt sich eine sehr einfache Möglichkeit der Festlegung eines anzustrebenden Mittelwertes der Qualität des aufbereiteten Altglases, von dem aus obere und untere Warnwerte festgelegt werden können.

Die Merkmale des Anspruches 5 ermöglichen die Feststellung eines herrschenden Trends in der Entwicklung der Qualität des aufbereiteten Altglases auf besonders einfache Weise.

Ein weiteres Ziel der Erfindung ist es, eine Einrichtung zur Durchführung des erfindungsgemäßen Verfahrens vorzuschlagen.

Ausgehend von einer Einrichtung gemäß dem Oberbegriff des Anspruches 6 werden bei einer solchen Einrichtung die kennzeichnenden Merkmale des Anspruches 6 vorgeschlagen.

Durch diese Maßnahmen wird ein einfacher Aufbau der Einrichtung ermöglicht. So kann eine zweite Reihe von Ausblasdüsen und die Anordnung zweier Behälter für die Aufnahme der aussortierten Nicht-Eisen-Metall-Partikel, bzw. der opaken Fremdstoffe entfallen, wie sie bei einer bekannten Einrichtung vorgesehen sind. Durch den Wegfall einer von zwei Reihen von Ausblasdüsen, die bei der bekannten Einrichtung an beiden Seiten der Freifallstrecke angeordnet sind, wird auch eine unerwünschte gegenseitige Beeinflussung der Ausblasdüsen vermieden, wodurch ein exakteres Ausscheiden der Fremdstoffe aus dem aufbereiteten Altglas ermöglicht wird.

Die Erfindung wird nun anhand der Zeichnung näher erläutert. Dabei zeigen:
Fig. 1 schematisch eine Einrichtung zur Durchführung des erfindungsgemäßen Verfahrens,
Fig. 2 ein Blockschaltbild der Auswerteeinrichtung,
Fig. 3 ein Diagramm zur Erläuterung der Trendanalyse und
Fig. 4 ein Diagramm zur Erläuterung der Anwendung der Trendanalyse.

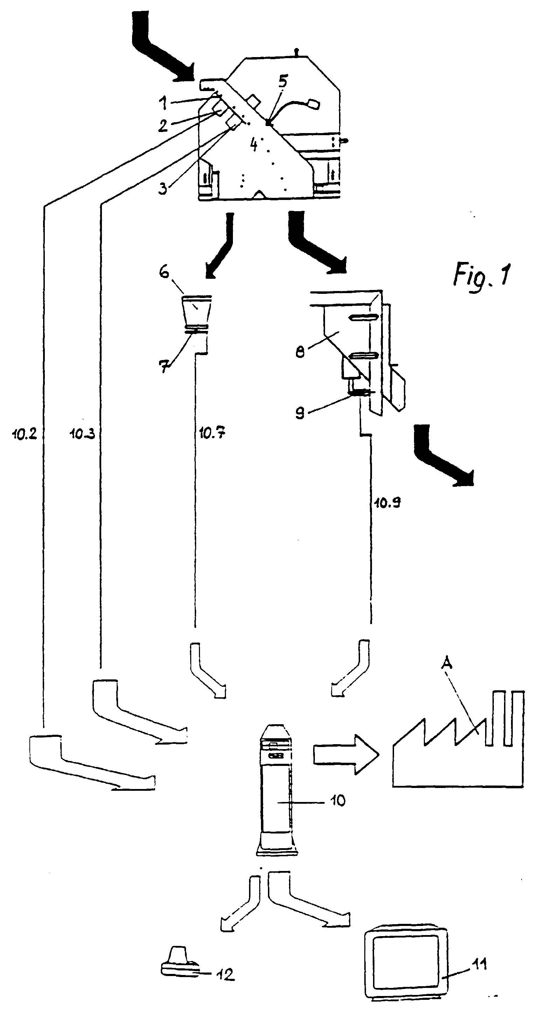

Das erfindungsgemäße Verfahren wird anhand der Fig. 1 beschrieben.

Die Probennahme aus dem Strom des in einer Altglasaufbereitungsanlage gereinigten Altglases und die Probenvorbereitung durch Trocknen, Absaugen der Feinteile und Absieben geschieht auf die in der AT 399 400 B beschriebenen Weise.

Die vorbereitete Probe wird auf eine Rutsche 1 einlagig geschichtet aufgegeben und passiert zwei über die gesamte Breite angeordnete Sensorenreihen 2 und 3, wobei die Sensoren 2 zu Nicht-Eisenmetall-Erkennung und die Sensoren 3 zur KSP-Erkennung dienen. An die Rutsche 1 schließt eine Freifallstrecke 4 an. Wird nun von einem der Sensoren 2, 3 eine Verunreinigung erkannt - Nicht-Eisenmetalle, (im weiteren kurz NE genannt) oder KSP - so übermittelt dieser ein Impulssignal an den Rechner 10 entsprechend der Art der Verunreinigung über die zugehörige Datenleitung 10,2 bzw.10.3 und dieser steuert die Blasdüsen 5 zeitverzögert an, die die Verunreinigung aus dem Glasstrom ausblasen. Aus der Dauer der einzelne Impulssignale an den Rechner können auch die Korngrößen der Verunreinigungen errechnet werden.

Die ausgeblasenen Verunreinigungen werden über nicht dargestellte Leiteinrichtungen einem Auffangbehälter 6 zugeführt, der auf einer Wiegezelle 7 steht. Die Wiegezelle 7 ist mittels der Datenleitung 10.7 mit dem Rechner 10 verbunden, der die Gewichtsänderung infolge der ausgeblasenen Verunreinigung ermittelt und diese der Art der Verunreinigung (NE oder KSP) zuordnet, aufaddiert und den jeweils letzen Wert einer jeden Gruppe von Verunreinigungen NE bzw. KSP speichert.

Die die Freifallstrecke 4 unbeeinflußt passierenden Reinglasstücke werden in einem Reinglasbehälter 8 gesammelt, der ebenfalls auf einer Wiegezelle 9 steht, die über die Datenleitung 10.9 mit dem Rechner 10 verbunden ist. Der Rechner speichert dabei den jeweils letzten Wert des Gewichtes.

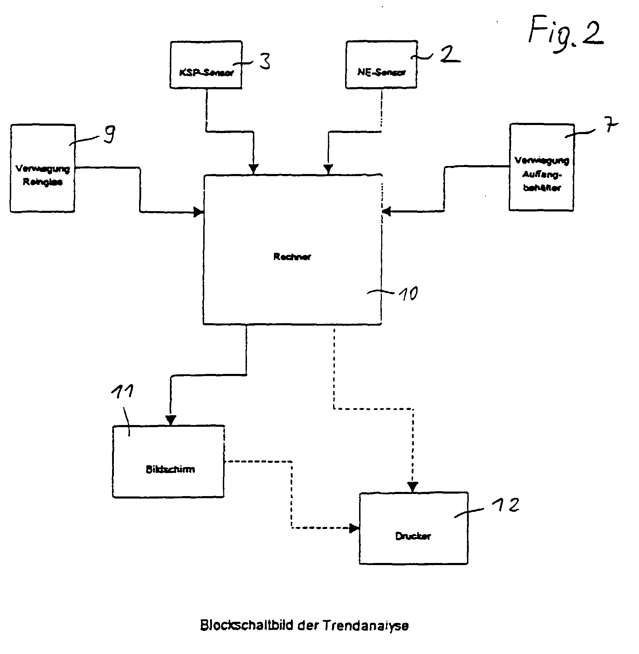

Wie aus der Fig. 2 zu ersehen ist, ist der Rechner 10 eingangsseitig mit den Sensoren 2 und 3, und den Wiegezellen 7 und 9 zur Erfassung der Gewichtszunahmen des Reinglasbehälters 8 und des Fremdstoffbehälters 6 verbunden und ausgangsseitig mit einem Bildschirm 11 und einen Drucker 12.

Zur Auswertung werden die im Rechner 10 gespeicherten Gewichtszunahmen des Auffangbehälters 6 getrennt nach NE-und KSP-Verunreinigungen über einen einstellbaren, definierten Zeitraum t, vorzugsweise zwischen 1 und 30 Minuten, ins Verhältnis gesetzt zur gesamten in diesem Zeitraum durchgesetzten Probemenge. Diese Probemenge setzt sich zusammen aus den im definierten Zeitraum t angefallenen Gewichtszunahmen infolge NE und KSP im Auffangbehälter 6 plus den Zunahmen im Behälter 8. Die Ergebnisse dieser Auswertungen werden auf einem Bildschirm 11 angezeigt und können bei Bedarf durch den Drucker 12 ausgedruckt werden. Jedenfalls bleiben sie im Rechner gespeichert.

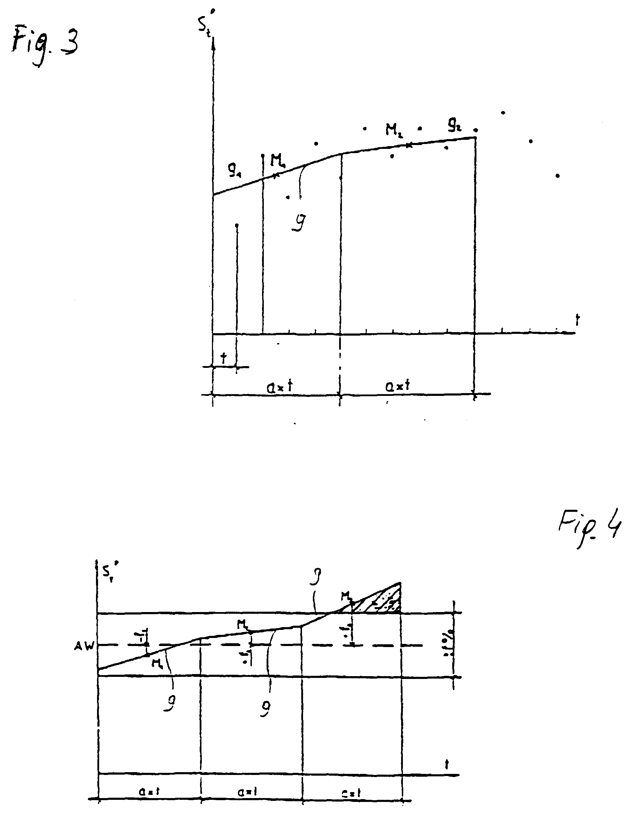

Zur Trendanalyse ist wie aus Fig. 3 ersichtlich, vorgesehen, daS eine gewisse Anzahl a zwischen 4 und 10 hintereinanderfolgender Auswertungsergebnisse solcher Auswertungszyklen über eine Zeitachse als Punkthaufen von NE/Probemenge - sowie KSP/Probemengenverhältnissen aufgezeichnet werden und mittels eines Regressionsverfahrens Ausgleichgerade g durch diese beiden Punkthaufen gelegt werden. Die positiven oder negativen Steigungen dieser Geraden zeigen den während dieser Auswertungszyklen herrschenden Trend zu einer Verschlechterung bzw. Verbesserung der Reinheit der Probe an. Auch dieser wird auf einem Bildschirm angezeigt und kann ausgedruckt werden.

In einer vereinfachten Trendanalyse kann anstelle der während dieser Auswertungszyklen ermittelten Verhältniszahlen zwischen NE-Gewichtszunahme oder KSP-Gewichtszunahme zu Probenmenge auch nur die Anzahl der Impulssignale für NE und/oder KSP während des Zeitraumes t zur Probenmenge als Verhältniszahl(en) ausgewiesen werden und in eine Trendanalyse, wie oben beschrieben einfließen.

Wetters ist vorgesehen, daß bei der jeweils aktuellen Trendanzeige auch die Trends von wenigstens der vorhergehenden Auswertung angezeigt werden.

Zudem ist vorgesehen, die Mittelwerte der Ergebnisse aus den einzelnen Auswertungszyklen in einen Speicher zu schreiben. In diesem Speicher sollen zwischen 100 und 500 Auswertezyklen Platz haben. Der Speicher wird immer wieder aktualisiert, indem der letzte Wert hereingenommen und der älteste verworfen wird. So soll ein durchschnittlicher Anlagenwert AW ermittelt werden.

Für die Ermittlung des Anlagewertes AW sollen zumindest die innerhalb der letzten Stunde in den einzelnen Zeiträumen t erfaßten Mittelwerte herangezogen und das entsprechende Mittel errechnet werden. Bei längerem Betrieb kann der Anlagenwert AW aus allen im Speicher des Rechners 10 befindlichen Mittelwerten errechnet werden.

Ausgehend von dem Anlagenwert AW können, wie aus der Fig. 4 ersichtlich ist, Warngrenzen festgelegt werden, die um den Wert ±f unter und über dem Anlagenwert AW liegen.

Während des Probenahmezyklusses wird die Abweichung des Mittelpunktes M der letzten errechneten Ausgleichsgerade g vom Erfahrungswert AW in Prozent ausgewiesen.

Dieser Prozentsatz gibt die Güte der in den letzten a Zeiteinheiten beprobten Materialmenge wider (Fig. 4).

Beim Überschreiten der vorgegebenen Warengrenzen wird vom Rechner über Regeleinrichtungen in den Aufbereitungsprozeß für Altglas (A) eingegriffen z.B. durch Zurücknahme der Aufgabemenge in einer nicht dargestellten Altglas- Aufbereitungseinrichtung.

Dabei wird bei Über- oder Unterschreiten einer Warngrenze zweckmäßigerweise eine Handsichtung einer Probe des im Behälter 7 gesammelten Materials durchgeführt. Bestätigt sich dabei z.B. eine zu schlechte Güte der Probe, so kann dies durch einen Eingriff in den Betrieb einer vorgeschalteten Altglas-Aufbereitungsanlage (nicht dargestellt) im Sinne einer Verminderung des Durchsatzes an aufzubereitendem Altglas korrigiert werden. Andererseits kann bei unterschreiten der unteren Warngrenze nach Bestätigung der entsprechend hohen Qualität der Probe durch eine Handsichtung der Durchsatz der Altglas-Aufbereitungsanlage erhöht werden, um deren Betrieb wirtschaftlicher zu gestalten.

Bei der Handsichtung werden mit den Fehlstoffen mit ausgeblasene Glasteilchen ausgesondert und nach Erfahrungswerten auf die beiden Gruppen von Fehlstoffen NE und KSP aufgeteilt, wobei mit den sehr leichten NE Teilen, wie Flaschenverschlüssen mehr Glasteile mit ausgeblasen werden als bei den doch schwereren KSP Teilen.

Am Ende jeder Probe errechnet ein Programm den Durchschnitt aller Abweichungen und führt so zu einer Aussage über die Reinheit der Gesamtprobe. Dies wird ausgedruckt und dient zur Dokumentation.

Um mit Hilfe dieser Art der Probenanalayse auch genaue Aussagen über die Menge der in der Probe enthaltenen Verunreingungen treffen zu können - insbesondere, ob die Materialgüte den vorgegebenen Standards oder Erwartungswerten entspricht - ist die Einbeziehung von Vergleichswerten erforderlich.

Dazu werden die Gewichtsverhältnis- bzw. normierten Schlagzahlwerte (bezogen auf die gesamte Probenmenge und den gesamten Probenzeitraum von einer großen Anzahl vorangegangener ordnungsgemäß abgeschlossener Probennahmen in einen Speicher geschrieben. Der Speicher kann nach jeder Probennahme aktualisiert werden, indem der letzte Wert hereingenommen und der älteste verworfen wird. Diese Funktion läßt sich aber auch - nach Erreichen eines stabilen Zustandes - stillsetzen.

## Patentansprüche

1. Verfahren zur Bestimmung der Reinheit von aufbereitetem Altglas, bei dem eine Probenmenge aus dem aufbereiteten Altglasstrom entnommen und vorzugsweise einlagig aufgeschüttet und über eine Freifallstrecke rieseln gelassen wird, und die Fremdkörper der Probenmenge nach den Gruppen der Nicht-Eisen-Metalle und der opaken Fremdstoffe getrennt erfaßt, ausgeblasen und gewogen werden und zur Feststellung der Güte der Probe die Verhältniszahlen von Nicht-Eisen-Metall-Beimengungen zur gesamten Probenmenge, bzw. der opaken Fremdstoffe zur gesamten Probenmenge ermittelt werden, **dadurch gekennzeichnet**, daß diese Gruppen von Fremdstoffe gemeinsam kontinuierlich gewogen und jede Gewichtszunahme, je nach dem weiche Gruppe von Fremdstoffen - Nicht-Eisen-Metalle oder opake Fremdstoffe - unmittelbar vor der jeweiligen Gewichtszunahme erfaßt wurde, dieser Gruppe von Fremdstoffen zugezählt wird.

2. Verfahren nach Anspruch 1, **dadurch gekennzeichnet**, daß nach Ablaut eines bestimmten Zeitintervalls (t) die aussortierten Mengen an Nicht-Eisenmetallen und opaken Fremdstoffen ins Verhältnis zu der in dieser Zeit abgearbeiteten Proben-Teilmenge gesetzt werden und diese ermittelten Verhältniszahlen mit vorgegebenen Warngrenzen verglichen werden.

3. Verfahren nach Anspruch 1 oder 2, **dadurch gekennzeichnet**, daß die in einem Zeitintervall ermittelten Verhältniszahlen der Menge an Nicht-Eisen-Metallen, bzw. Menge an opaken Fremdstoffen zur gesamten Probenmenge mit den in einer bestimmten Anzahl von auf diesen Zeitintervall (t) direkt folgenden Zeitintervallen (t), z.B. vier bis zehn Zeitintervalle (t), ermittelten Verhältniszahlen zur Erfassung des herrschenden Trends miteinander verglichen werden.

4. Verfahren nach einem der Ansprüche 1 bis 3, **dadurch gekennzeichnet**, daß die über einen längeren Zeitraum (T), z.B. eine Stunde, ermittelten Verhältniszahlen gemittelt werden und zu diesem Mittelwert eine maximale Abweichung nach oben und unten festgelegt wird, wobei bei Über- bzw. Unterschreiten dieser Grenzen das ausgeschiedene Material der Probe handverlesen und nach Erfassung der Menge der allenfalls mit ausgeschiedenen Glaspartikel die korrigierten Verhältniszahlen ermittelt werden, wobei die anteilige Zuordnung der Menge der mit ausgeschiedenen Glaspartikel auf Nicht-Eisen-Metalle und opake Fremdstoffe vorzugsweise nach Erfahrungswerten erfolgt.

5. Verfahren nach Anspruch 1 oder 2, **dadurch gekennzeichnet**, daß die in einem Zeitintervall ermittelte Zahl von erfaßten Nicht-Eisen-Metall Partikel mit den in einer bestimmten Anzahl von auf diesen Zeitintervall (t) direkt folgenden Zeitintervallen (t), z.B. vier bis zehn Zeitintervalle (t), ermittelten Zahlen von erfaßten Nicht-Eisen-Metall-Partikel zur Erfassung des herrschenden Trends miteinander verglichen werden und die in einem Zeitintervall ermittelte Zahl von erfaßten Partikel aus opaken Fremdstoffen mit den in einer bestimmten Anzahl von auf diesen Intervall direkt folgenden Zeitintervallen (t), z.B. vier bis zehn Zeitintervalle (t), ermittelten Zahlen von erfaßten Partikel aus opaken Fremdstoffen zur Erfassung des herrschenden Trends miteinander verglichen werden.

6. Einrichtung zur Durchführung des Verfahrens nach Anspruch 1, mit einem Probennehmer, der in einen Strom von aufbereitetem Altglas einführbar und zu einer Aufgabeeinrichtung verfahrbar ist, die zu einer Rutsche, gegebenenfalls über einen vorgeordneten Schwingförderer führt, wobei im Bereich der Rutsche oder einer an diese anschließenden Freifallstrecke (4) in getrennten, quer zur Freifallstrecke (4) verlaufenden Reihen angeordnete Sensoren (2, 3) zur Erfassung von Nicht-Eisen-Teilen und opaken Teilen vorgesehen sind, weiche Sensoren (2, 3) quer zur Freifallstrecke (4) angeordnete Blasdüsen (5) zumindest mittelbar steuern, wobei an der von den Blasdüsen (5) abgekehrten Seite der Freifallstrecke (4) mindestens ein Behälter (7) zur Aufnahme des ausgesonderten Materials angeordnet ist und ein weiterer Behälter (8) zur Aufnahme des Reinglases vorgesehen ist, die auf mit einem Rechner (10) verbundene Wiegezellen (7, 9) abgestützt sind, **dadurch gekennzeichnet**, daß die Blasdüsen (5) in lediglich einer quer zur Freifallstrecke (4) verlaufenden Reihe angeordnet und gegen lediglich einen, zur gemeinsamen Aufnahme von opaken Fremdstoffen und Nicht-Eisen-Metall-Beimengungen vorgesehenen Behälter (6) gerichtet sind, weicher Behälter (6) auf den Wiegezellen (7) steht, wobei die Wiegezellen (7) und die Sensoren (2, 3) über Signalleitungen mit dem Rechner (10) verbunden sind, der die Blasdüsen (5) steuert und die Gewichtszunahme des Behälters (6) den jeweils zuvor erfaßten opaken, bzw. Nicht-Eisen-Teilen zuordnet.

## Claims

1. A method for determining the purity of processed waste glass, in which a sample quantity is taken from the processed waste glass stream and the sample is deposited in preferably one stratified layer and is allowed to flow over a free-falling track, and the foreign bodies of the sample quantity are detected separately according to non-ferrous metals and opaque foreign particles, are blown out and weighed, and the ratio figures of non-ferrous metal admixtures to the entire sample quantity and the opaque foreign matter to the entire sample quantity are determined in order to establish the quality of the sample, characterized in that said groups of foreign matter are weighed jointly in a continuous manner and every case of increase in weight, depending on which group of foreign matter (non-ferrous metal or opaque foreign matter) was detected immediately before the respective increase of weight, is added to this group of foreign matter.

2. A method as claimed in claim 1, characterized in that after the expiration of a specific time interval (t) the extracted quantities of non-ferrous metals and opaque foreign matter are put into relationship to the partial sample quantity processed in this period of time and said determined ratio figures are compared with predetermined warning thresholds.

3. A method as claimed in claim 1 or 2, characterized in that the ratio figures of the quantity of non-ferrous metals or the quantity of opaque foreign matter to the entire sample quantity as determined within a time interval are compared with the ratio figures for detecting the prevailing trends, which figures are determined within a specific number of time intervals (t), e.g. four to ten time intervals, which follow the aforementioned time interval (t).

4. A method as claimed in one of the claims 1 to 3, characterized in that the ratio figures as determined over a longer period of time (T), e.g. one hour, are averaged and a maximum upward and downward deviation is determined in connection with said mean value, with the separated material of the sample being picked by hand in the case of any exceeding or falling below said thresholds and the corrected ratio figures being determined after the detection of the quantity of the jointly separated glass particles, if any, with the proportionate allocation of the quantity of the jointly separated glass particles to the non-ferrous metals and the opaque foreign matter preferably occurring according to experimental values.

5. A method as claimed in claim 1 or 2, characterized in that the number of non-ferrous metal particles detected within a time interval is compared, for the the purpose of determining the prevailing trends, with the figures of detected non-ferrous metal particles within a specific number of time intervals (t), e.g. four to ten time intervals, which directly follow said time interval (t) and the number of particles made of opaque foreign matter detected in a time interval is compared, for the purpose of determining the prevailing trends, with the figures of opaque foreign matter detected within a specific number of time intervals (t), e.g. four to ten time intervals, which directly follow said time interval (t).

6. A device to perform the method as claimed in claim 1, with a sampler which can be introduced into a stream of processed waste glass and can be moved towards a feed device which leads to a chute, optionally by way of an upstream oscillating conveyor, with sensors (2, 3) being provided for the detection of non-ferrous particles and opaque particles in the zone of the chute or a free-falling track (4) downstream of the same, which sensors (2, 3) are arranged in separate rows extending transversally to the free-falling track (4) and at least indirectly control blast nozzles (5) arranged transversally to the free-falling track (4), with at least one receptacle (7) for receiving the extracted material being arranged on the side of the free-falling track (4) which is averted from the blast nozzles (5) and a further receptacle (8) being provided for receiving the pure glass, which receptacles rest on weighing cells (7, 9) which are connected with a computer (10), characterized in that the blast nozzles (5) are arranged merely in one row extending transversally to the free-falling track (4) and are directed against merely one receptacle (6) provided for jointly receiving opaque foreign matter and non-ferrous admixtures, which receptacle (6) stands on the weighing cells (7), with the weighing cells (7) and the sensors (2, 3) being connected by way of signal lines with the computer (10) which controls the blast nozzles (5) and allocates the weight increase of the receptacle (6) to the respectively previously detected opaque and non-ferrous particles.

## Revendications

1. Procédé en vue de la détermination de la pureté de groisil, par lequel un échantillon est prélevé dans le flux de groisil, déversé de préférence en une seule couche, en s'écoulant selon une trajectoire de chute libre, les corps étrangers de l'échantillon sont éliminés par soufflage, en identifiant séparément le groupe des métaux non-ferreux et celui des corps étrangers opaques, et pesés, puis, en vue d'apprécier la qualité de l'échantillon, la proportion des métaux non-ferreux par rapport à la quantité totale d'échantillon, ou celle des corps étrangers opaques par rapport à la quantité totale d'échantillon, est déterminée, caractérisé en ce que ces groupes de corps étrangers sont pesés ensemble en continu et que chaque augmentation de poids, selon le groupe de corps étrangers - métaux non-ferreux ou corps opaques - repéré immédiatement avant l'augmentation de poids à l'instant considéré, sera ajouté à ce groupe de corps étrangers.

2. Procédé selon revendication 1, caractérisé en ce que les proportions des quantités de métaux non-ferreux et de corps étrangers opaques prélevées après un intervalle de temps (t) prédéterminé, sont évaluées par rapport à la quantité de la partie d'échantillon traitée pendant ce même temps, et que ces proportions sont comparées à des seuils d'alarme.

3. Procédé selon la revendication 1 ou 2, caractérisé en ce que les proportions des quantités de métaux non-ferreux ou de corps étrangers opaques mesurées pour un intervalle de temps par rapport à la quantité totale d'échantillon, sont comparées aux proportions correspondant à des intervalles de temps (t) immédiatement consécutifs à cet intervalle de temps (t), par exemple quatre à dix intervalles de temps (t), en vue de déterminer la tendance qui prévaut.

4. Procédé selon l'une quelconque des revendications 1 à 3, caractérisé en ce que l'on calcule la moyenne des proportions mesurées sur un intervalle de temps plus long (T), par exemple une heure, et qu'à cette moyenne est associée une déviation maximale vers le haut et vers le bas, moyennant quoi en cas de dépassement de ces limites supérieure ou inférieure, il est procédé au tri manuel des matériaux rejetés de l'échantillon, et après détermination de la quantité de particules de verre qui ont été éliminées en même temps, les proportions corrigées sont calculées, en affectant de préférence les quantités de verre éliminées aux métaux non-ferreux et les corps étrangers opaques selon des valeurs fondées sur l'expérience.

5. Procédé selon revendications 1 ou 2, caractérisé en ce que le nombre de particules de métaux non-ferreux rejetées déterminé dans un intervalle de temps donné est comparé aux nombres de particules de métaux non-ferreux rejetées déterminés dans un certain nombre d'intervalles de temps (t) immédiatement consécutifs à cet intervalle de temps (t), par exemple quatre à dix intervalles de temps (t), en vue de préciser la tendance prévalente, et que le nombre de corps étrangers opaques rejetés déterminé dans un intervalle de temps donné est comparé aux nombres de corps étrangers opaques rejetés déterminés dans un certain nombre d'intervalles de temps (t) immédiatement consécutifs à cet intervalle de temps (t), par exemple quatre à dix intervalles de temps (t), en vue de déterminer la tendance prévalente.

6. Dispositif pour la mise en oeuvre du procédé selon revendication 1, utilisant un préleveur pouvant être introduit dans un flux de groisil et déplacé vers un dispositif de réception conduisant, le cas échéant par l'intermédiaire d'un alimentateur vibrant préréglé, à une goulotte sur laquelle, ou à une trajectoire de chute libre (4) qui la prolonge, des capteurs (2,3) sont disposés en rangées séparées transversales à la trajectoire de chute libre (4), pour détecter les pièces de métaux non-ferreux et les pièces opaques, lesquels capteurs (2,3) pilotent des buses de soufflage (5) disposées transversalement à la trajectoire de chute libre (4), au moins un conteneur (6), prévu pour la réception des matériaux éliminés, étant placé sur la trajectoire de chute libre (4) du côté de l'éjection par les buses de soufflage (5), complété par un autre conteneur (8) pour la réception du verre propre, ces conteneurs étant supportés par des unités de pesage (7,9) reliées à un calculateur (10), caractérisé en ce que les buses de soufflage (5) sont disposées sur une seule rangée transversale à la trajectoire de chute libre (4) et dirigées uniquement vers un conteneur (6) destiné à la réception commune de corps étrangers opaques et de métaux non-ferreux, lequel conteneur (6) est posé sur les unités de pesage (7), lesquelles unités de pesage et les capteurs (2,3) étant reliés par des liaisons de transmission de signaux au calculateur (10), qui pilote les buses de soufflage (5) et attribue chaque fois l'augmentation de poids du conteneur (6) à la particule identifiée, respectivement opaque ou de métal non-ferreux.
